(19) Europäisches Patentamt

European Patent Office

Office européen des brevets

(11) **EP 0 742 356 B1**

(12) **EUROPÄISCHE PATENTSCHRIFT**

(45) Veröffentlichungstag und Bekanntmachung des Hinweises auf die Patenterteilung:
**05.06.2002 Patentblatt 2002/23**

(51) Int Cl.⁷: **F02C 9/28**, F02C 9/54

(21) Anmeldenummer: **96810259.0**

(22) Anmeldetag: **23.04.1996**

(54) **Verfahren zur Einstellung einer Hauptregelgrösse beim Betrieb einer Gasturbogruppe**

Method to adjust a main control parameter of a gas turbine

Méthode à ajuster un paramètre principale de la regulation d'une turbine à gaz

(84) Benannte Vertragsstaaten:
**DE FR GB NL**

(30) Priorität: **08.05.1995 DE 19516799**

(43) Veröffentlichungstag der Anmeldung:
**13.11.1996 Patentblatt 1996/46**

(73) Patentinhaber: **ABB Schweiz Holding AG
5400 Baden (CH)**

(72) Erfinder:
• **Hepner, Stephan, Dr.
5628 Althäusern (CH)**
• **Scherrer, Johann-Kaspar, Dr.
8057 Zürich (CH)**

• **Seketa, Bozidar
5430 Wettingen (CH)**

(74) Vertreter: **ABB Patent Attorneys
c/o ABB Schweiz AG,
Intellectual Property (CH-LC/IP),
Brown Boveri Strasse 6
5400 Baden (CH)**

(56) Entgegenhaltungen:
WO-A-93/15311      DE-A- 3 422 210
US-A- 4 137 707      US-A- 4 173 119
US-A- 4 248 040      US-A- 4 414 807
US-A- 5 133 182

## Beschreibung

### Technisches Gebiet

Die Erfindung betrifft ein Verfahren zur Einstellung einer Hauptregelgrösse beim Betrieb einer Gasturbogruppe, im wesentlichen bestehend aus einem Verdichter, mindestens einer Brennkammer, mindestens einer Turbine und einem Generator.

### Stand der Technik

Derartige Verfahren zur Einstellung einer Hauptregelgrösse beim Betrieb einer Gasturbogruppe sind bekannt. Als Regelungsgrösse kann beispielsweise die Leistung oder die Drehzahl verwendet werden. Als Regelungssystem werden beispielsweise drei Regler verwendet. Bei Verwendung der Leistung als Hauptregelgrösse ist der erste Regler ein Leistungsregler, der den Brennstoffmassenfluss zur Brennkammer entsprechend der geforderten Leistung einstellt. Der zweite Regler ist ein Turbineneintrittstemperaturregler, der den Brennstoffmassenfluss zur Brennkammer entsprechend der geforderten Turbineneintrittstemperatur einstellt. Der dritte Regler ist ebenfalls ein Turbineneintrittstemperaturregler, welcher die Leitschaufelposition im Verdichter entsprechend der geforderten Turbineneintritts-temperatur einstellt.

Unabhängig von der Hauptregelgrösse beeinflussen der erste und der zweite Regler das gleiche Stellglied, nämlich den Brennstoffmassenfluss. Dadurch können Situationen entstehen, wo sich die beiden Regler gegenseitig stören, indem der eine den Brennstoffmassenfluss drosseln, der andere hingegen erhöhen will.

Der zweite und der dritte Regler sind abhängig von derselben Ausgabegrösse (Turbineneintrittstemperatur). Dies kann zu wechselseitiger Beeinflussung und zur Destabilisierung der Regler führen.

Um diese Situationen zu vermeiden, ist eine komplizierte Schaltlogik nötig. Weiter reagiert das Regelungssystem sehr anfällig auf die Regelungsparameter, was das Einstellen der Regler sehr erschwert.

Die Schrift WO 93/15311 offenbart ein Verfahren zur Regelung der Leistung einer Gasturbine. Zur Regelung wird die Differenz von einem Leistungssollwert und der ermittelten Leistung an einen Regler zur Regelung von verschiedenen Stellgrössen (Temperatur, Drehzahl) übermittelt. Nachteilig bei diesem Konzept ist allerdings, dass parallele Stellgrössen über einen gemeinsamen Selektor geleitet werden. Dies führt zu einer Instabilität des Regelsystems, da die Stellgrössen nicht unabhängig, sondern nur gemeinsam auf das System einwirken können.

Die beiden Schriften US-4,137,707 und US-4,173,119 stellen Regelsysteme der Temperatur und die Position der Leitschaufeln für Gasturbinen dar. Nachteilig fehlt allerdings ein übergeordnetes System zur koordinierten Regelung der Leistung.

### Darstellung der Erfindung

Der Erfindung liegt die Aufgabe zugrunde, bei einem Verfahren zur Einstellung einer Hauptregelgrösse beim Betrieb einer Gasturbogruppe der eingangs genannten Art eine einfache, schnelle und sichere Regelung zu ermöglichen.

Erfindungsgemäss wird dies bei dem Verfahren gemäss dem Oberbegriff des Anspruchs 1 dadurch erreicht, dass die resultierende Hauptregeldifferenz zwischen dem Sollwert und dem Messwert über ein Management auf mindestens zwei Kaskaden verteilt wird, wobei die Kaskaden im wesentlichen aus einem Hauptregelgrössen-Regler und einem nachgeschalteten Grössen-Regler, welcher auf das jeweilige Grössen-Stellglied einwirkt, aufgebaut sind. Die Vorteile der Erfindung sind unter anderem darin zu sehen, dass durch die Verteilung der jeweils benötigten Hauptregeldifferenz, beispielsweise einer Leistungsdifferenz oder einer Drehzahldifferenz, vom Management auf die Kaskaden eine Beeinflussung zwischen den Kaskaden ausgeschlossen wird. Dies erlaubt eine beliebige Zahl von Kaskaden. Durch das Nacheinanderschalten von Hauptregelgrössen-Regler und Grössenregler in den Kaskaden ist der Grössenregler immer regelbereit. Dadurch werden Ueberbelastungen durch Ueberschreiten von Grenzwerten in der Gasturbogruppe vermieden.

### Kurze Beschreibung der Zeichnung

In der Zeichnung ist ein Ausführungsbeispiel der Erfindung anhand einer Gasturbogruppe dargestellt.

Es zeigen:

Fig. 1 eine schematische Darstellung der Regelung einer Gasturbogruppe;

Fig. 2 eine schematische Darstellung der Regelung einer Gasturbogruppe mit sequentieller Verbrennung.

Es sind nur die für das Verständnis der Erfindung wesentlichen Elemente gezeigt. Gleiche Elemente sind in den verschiedenen Zeichnungen mit den gleichen Bezugszeichen versehen. Turbineneintrittstemperatur wird im folgenden mit TIT (engl. turbine inlet temperature) abgekürzt.

### Weg zur Ausführung der Erfindung

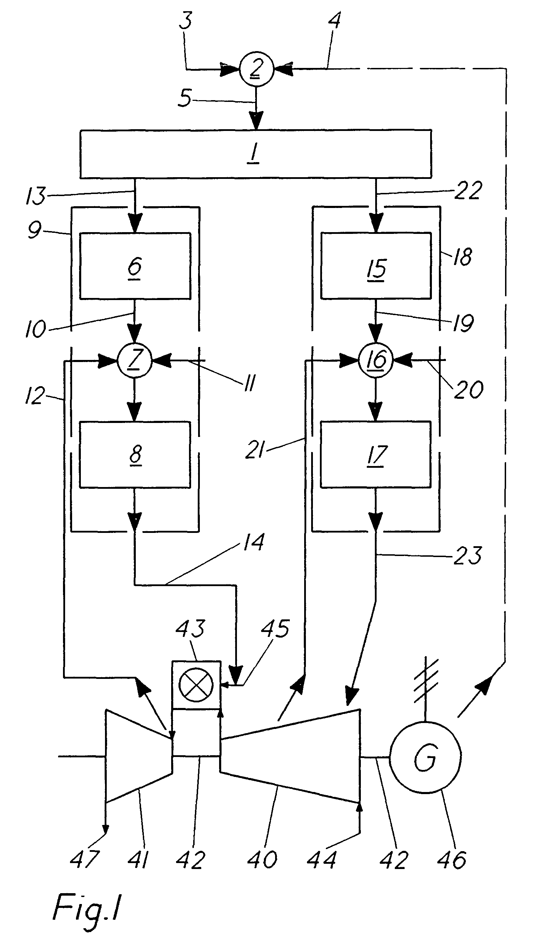

Die in Fig. 1 dargestellte Gasturbogruppe besteht im wesentlichen aus einem Verdichter 40, einer Turbine 41 und einem Generator 46, die über eine Welle 42 verbunden sind, sowie einer Brennkammer 43. Im Verdichter 40 wird Luft über eine Luftzuführung 44 angesaugt und komprimiert. Im Verdichter befinden sich nicht dargestellte, verstellbare Leitschaufeln. Durch die Leitschaufelverstellung wird der über die Luftzuführung 44 angesaugte Luftmassenstrom eingestellt. Die verdichtete Luft wird in die Brennkammer 43 geleitet, der Verbrennungsluft Brennstoff 45 zugeführt und das Brennstoff-Luft-Gemisch verbrannt. Durch die Menge des Brennstoffes 45 wird im wesentlichen die Temperatur der entstehenden Rauchgase beeinflusst. Die Rauchgase werden in die Turbine 41 eingeleitet, wo sie entspannt werden und ein Teil der Energie der Rauchgase in Drehenergie umgewandelt wird. Diese Drehenergie wird über die Welle 42 zum Antrieb des Generators 46 verwendet. Die noch heissen Abgase werden über eine Abgasleitung 47 abgeführt. Die Wärmeenergie der Abgase kann weiter genutzt werden, bsw. in einem nicht dargestellten Abhitzedampferzeuger, zur Erzeugung von Wasserdampf.

Oberhalb der Gasturbogruppe ist schematisch die Regelung dargestellt. Als Hauptregelgrösse wird im folgenden die Leistung der Gasturbogruppe verwendet. In einem Summenpunkt 2 wird eine Leistungsdifferenz 5 zwischen einem geforderten Leistungs-Sollwert 3 und einem Leistungs-Messwert 4 ermittelt. Die Leistungsdifferenz 5 wird in einem Leistungsmanagement 1 verarbeitet und auf Kaskaden aufgeteilt. Ein Leistungsanteil 13 wird auf eine Leistungs-Temperatur-Kaskade 9 und ein Leistungsanteil 22 auf eine Leistungs-Druck-Kaskade 18 verteilt.

In der Leistungs-Temperatur-Kaskade 9 wird der Leistungsanteil 13 in einen Leistungs-Regler 6 eingegeben und dort in eine Turbineneintrittstemperatur-Aenderung 10 umgewandelt. Die TIT-Aenderung 10 wird in einem Summenpunkt 7 zusammen mit einem TIT-Referenzwert 11 und einem TIT-Messwert 12 verarbeitet und in einen Temperatur-Regler 8 eingegeben. Der TIT-Referenzwert 11 wird lediglich zum Anfahren der Gasturbogruppe benötigt und ist an sich beliebig, da er durch die TIT-Aenderung 10 ausgeglichen werden kann. Im Temperatur-Regler 8 wird die eingegebene Temperatur in ein Signal für ein Stellglied, eine Brennstoffmassenflusseinstellung 14, umgewandelt. Ueber die Brennstoffmassenflusseinstellung 14 wird die Menge Brennstoff 45 eingestellt, die zur Erreichung der gewünschten TIT, und damit der Leistung nötig ist.

In der Leistungs-Druck-Kaskade 18 wird der Leistungsanteil 22 in einen Leistungs-Regler 15 eingegeben und dort in eine Druck-Aenderung 19 umgewandelt. Die Druck-Aenderung 19 wird in einem Summenpunkt 16 zusammen mit einem Druck-Referenzwert 20 und einem Druck-Messwert 21 verarbeitet und in einen Druck-Regler 17 eingegeben. Der Druck-Referenzwert 20 wird lediglich zum Anfahren der Gasturbogruppe benötigt und ist an sich beliebig, da er durch die Druck-Aenderung 19 ausgeglichen werden kann. Im Druck-Regler 17 wird der eingegebene Druck in ein Signal für eine Leitschaufeleinstellung 23 umgewandelt.

Zur Regelung der jeweiligen Gasturbogruppe werden die minimalen und maximalen Betriebsgrössen als Eckdaten aus dem Betriebskonzept benötigt, wie sie bsw. aus der EP 0 646 705 A1 (S.5 sowie Fig.3) bekanntgeworden sind. Aus dem jeweiligen Betriebskonzept kann dann zum Beispiel die maximale und minimale TIT entnommen werden.

Der Regelungsbereich des Leistungsreglers 6 ist somit durch die TIT-Grenzen aus dem Betriebskonzept gegeben. Der Leistungsregler 6 gibt eine TIT-Aenderung 10 ($\Delta$TIT) aus, welche durch die maximale und minimale TIT sowie durch den TIT-Referenzwert 11 bestimmt wird.

$$\Delta TIT_{minimal} = TIT_{minimal} - TIT_{Referenz}$$

$$\Delta TIT_{maximal} = TIT_{maximal} - TIT_{Referenz}$$

Die maximale TIT-Aenderung 10 ergibt sich somit aus der maximalen TIT entsprechend dem Betriebskonzept minus dem TIT-Referenzwert 11. Aus der maximalen TIT-Aenderung 10 lässt sich dann der maximale Leistungsanteil 13 berechnen, den das Leistungsmanagement 1 an die Leistungs-Temperatur-Kaskade 9 abgeben kann. Dadurch ist dem Leistungsmanagement 1 jederzeit das Leistungspotential (maximale Leistung minus derzeitige Leistung) der jeweiligen Leistungskaskade 9, 18 bekannt.

Das gleiche wie oben beschrieben folgt für den Leistungs-Regler 15, wo dann der Regelungsbereich durch die möglichen Leitschaufeleinstellungen gegeben ist. Dadurch lässt sich ebenfalls die maximale und minimale Druck-Aenderung 19 bestimmen, sowie der maximale und minimale Leistungsanteil 22.

Die Verteilung der Leistungsdifferenz 5 durch das Leistungsmanagement 1 an die Leistungs-Kaskaden 9 und 18 basiert auf einem Ueberlaufprinzip. Soll die Leistung durch die Eingabe eines höheren Sollwertes 3 angehoben werden, wird beispielsweise die Leistungsdifferenz 5 durch das Leistungsmanagement 1 zuerst an die Leistungs-Temperatur-Kaskade 9 abgegeben. Kann diese keine höhere Leistung mehr bringen, d.h. ist die maximale TIT und die maximale Leistung der Leistungs-Temperatur-Kaskade 9 erreicht, wird der restliche Anteil der Leistungsdifferenz 5 an die Leistungs-Druck-Kaskade 18 abgegeben. Dies geschieht natürlich nicht nacheinander, sondern simultan, da die jeweiligen Leistungsanteile der Kaskaden 9, 18 im Leistungsmanagement 1 bekannt sind.

Die Verteilung der Leistungsdifferenz 5 durch das Leistungsmanagement 1 kann natürlich auch durch ein Rücklaufprinzip erfolgen. Bei einer schnellen Regelung wird beispielsweise die geforderte Leistung zuerst gleichmässig auf die verschiedenen Leistungs-Kaskaden 9, 18 verteilt. Wird das Leistungsniveau beibehalten, wird Leistung von einer der Leistungs-Kaskaden 9 oder 18 abgezogen und an die andere Leistungs-Kaskaden 18 oder 9 abgegeben. Dies geschieht solange, bis jeweils das Leistungspotential ausgeschöpft und damit der Maximalwert der TIT oder des Drucks erreicht ist.

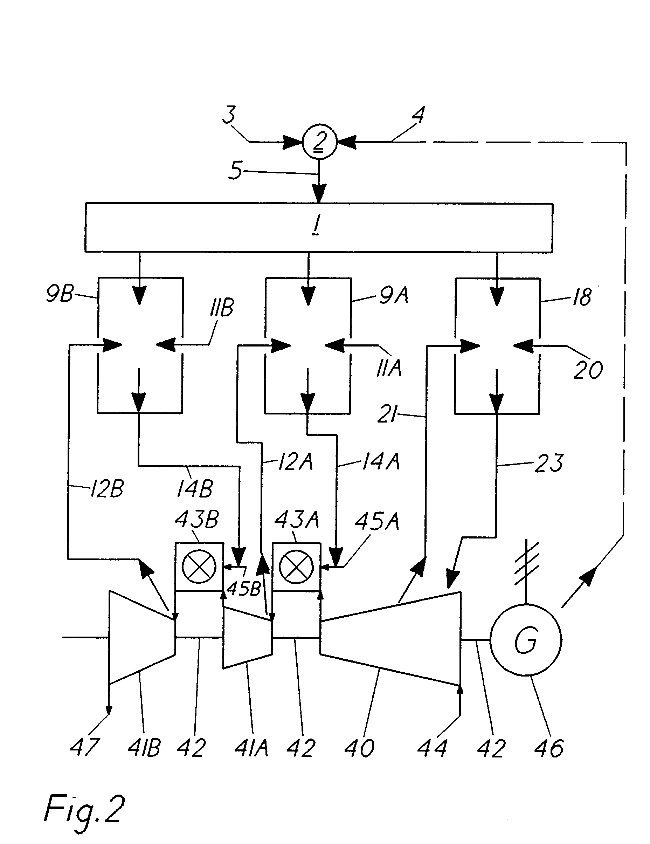

In Fig. 2 ist eine Gasturbogruppe mit sequentieller Verbrennung dargestellt. Sie besteht im wesentlichen aus einem Verdichter 40, einer ersten Turbine 41A mit zugehöriger ersten Brennkammer 43A, einer zweiten Turbine 41B mit zugehöriger zweiten Brennkammer 43B und einem Generator 46. Die im Verdichter 40 verdichtete Luft wird in die erste Brennkammer 43A geleitet. Dort wird der Verbrennungsluft Brennstoff 45A zugeführt und das Brennstoff-Luft-Gemisch verbrannt. Die entstandenen Rauchgase werden in die erste Turbine 41A eingeleitet, wo sie teilweise entspannt werden, unter Abgabe der Energie an die Welle 42. Die Abgase werden in die zweite Brennkammer 43B geleitet, wo Brennstoff 45B zugeführt und das Brennstoff-Abgas-Gemisch verbrannt wird. Die entstandenen Rauchgase werden in die zweite Turbine 41B eingeleitet, wo sie entspannt werden und ein Teil der Energie der Rauchgase in Drehenergie umgewandelt wird. Diese Drehenergie wird über die Welle 42 zum Antrieb des Generators 46 verwendet. Die noch heissen Abgase werden über eine Abgasleitung 47 abgeführt.

Zur Regelung werden hier drei Kaskaden verwendet, eine erste Leistungs-Temperatur-Kaskade 9A, eine zweite Leistungs-Temperatur-Kaskade 9B sowie eine Leistungs-Druck-Kaskade 18.

Die Regelung der Kaskaden 9A, 9B, 18 erfolgt dabei genau gleich wie unter Fig.1 beschrieben. Das Betriebskonzept muss natürlich der sequentiellen Verbrennung der Gasturbogruppe angepasst werden.

Das Leistungsmanagement 1 wird so angepasst, das die Leistungsdifferenz 5 auf die drei Leistungskaskaden 9A, 9B, 18 verteilt wird. Vorteilhafterweise wird mittels Ueberlaufprinzip bei einer Gasturbogruppe mit sequentieller Verbrennung zuerst das Leistungspotential der ersten Leistungs-Temperatur-Kaskade 9A ausgeschöpft. Mittels einer Brennstoffmassenflusseinstellung 14A wird ein TIT-Messwert 12A auf die maximale TIT gebracht. Danach wird das Leistungspotential der zweiten Leistungs-Temperatur-Kaskade 9B und nachfolgend dasjenige der Leistungs-Druck-Kaskade 18 ausgeschöpft.

Selbstverständlich ist die Erfindung nicht auf das gezeigte und beschriebene Ausführungsbeispiel beschränkt. Die Leistung kann durch alternative Hauptregelgrössen ersetzt werden, beispielsweise durch die Drehzahl oder die Frequenz (z. Bsp. bei Inselnetzen). Der TIT-Messwert 12 kann, falls er bei sehr hohen Turbineneintrittstemperaturen aus messtechnischen Gründen nicht ermittelt werden kann, auch durch zurückrechnen aus der Turbinenaustrittstemperatur und dem Druck gewonnen werden.

**Bezugszeichenliste**

| 1 | Leistungs-Management |
|---|---|
| 2 | Summenpunkt Leistung |
| 3 | Sollwert Leistung |
| 4 | Messwert Leistung |
| 5 | Leistungsdifferenz |
| 6 | Leistungs-Regler |
| 7 | Summenpunkt TIT |
| 8 | Temperatur-Regler |
| 9,9A,9B | Leistungs-Temperatur-Kaskade |
| 10 | TIT-Aenderung |
| 11,11A,11B | TIT-Referenzwert |
| 12,12A,12B | TIT-Messwert |
| 13,13A,13B | Leistungsanteil |
| 14,14A,14B | Brennstoffmassenflusseinstellung |
| 15 | Leistungs-Regler |
| 16 | Summenpunkt Druck |
| 17 | Druck-Regler |
| 18 | Leistungs-Druck-Kaskade |
| 19 | Druck-Aenderung |
| 20 | Druck-Referenzwert |
| 21 | Druck-Messwert |
| 22 | Leistungsanteil |
| 23 | Leitschaufeleinstellung |
| 40 | Verdichter |
| 41 | Turbine |
| 41A | erste Turbine |
| 41B | zweite Turbine |
| 42 | Welle |
| 43 | Brennkammer |
| 43A | erste Brennkammer |
| 43B | zweite Brennkammer |
| 44 | Luftzuführung |
| 45,45A,45B | Brennstoff |
| 46 | Generator |
| 47 | Abgasleitung |

**Patentansprüche**

**1.** Verfahren zur Einstellung einer Hauptregelgrösse beim Betrieb einer Gasturbogruppe, im wesentlichen bestehend aus einem Verdichter (40), mindestens einer Brennkammer (43), mindestens einer Turbine (41) und einem Generator (46), wobei der Sollwert (3) mit einem Messwert (4) verglichen wird und die resultierende Hauptregeldifferenz zwischen dem Sollwert (3) mit dem Messwert (4) auf ein Grössenstellglied (14, 23) übertragen wird, **dadurch gekennzeichnet, dass** die resultierende Hauptregeldifferenz zwischen dem Sollwert (3) und dem Messwert (4) über ein Management (1) auf mindestens zwei Kaskaden (9, 18) verteilt wird, wobei die Kaskaden (9, 18) im wesentlichen aus einem Hauptregelgrössen-Regler (6, 15) und einem nachgeschalteten Grössen-Regler (8, 17), welcher auf das jeweilige Grössen-Stellglied (14, 23) einwirkt, aufgebaut sind.

2. Verfahren nach Anspruch 1,
**dadurch gekennzeichnet,**
**dass** als Hauptregelgrösse die Leistung verwendet wird.

3. Verfahren nach Anspruch 1,
**dadurch gekennzeichnet,**
**dass** als Hauptregelgrösse die Drehzahl verwendet wird.

4. Verfahren nach Anspruch 2 oder 3,
**dadurch gekennzeichnet,**
**dass** mindestens eine Temperatur-Kaskade (9), im wesentlichen bestehend aus einem Hauptregelgrössen-Regler (6) und einem Temperatur-Regler (8), verwendet wird.

5. Verfahren nach Anspruch 4,
**dadurch gekennzeichnet, dass** als Stellglied des Temperatur-Reglers (8) eine Brennstoffmassenflusseinstellung (14) verwendet wird.

6. Verfahren nach Anspruch 2 oder 3,
**dadurch gekennzeichnet,**
**dass** mindestens eine Druck-Kaskade (18), im wesentlichen bestehend aus einem Hauptregelgrössen-Regler (15) und einem Druck-Regler (17), verwendet wird.

7. Verfahren nach Anspruch 6,
**dadurch gekennzeichnet,**
**dass** als Stellglied des Druck-Reglers (17) eine Leitschaufeleinstellung (23) im Verdichter (40) verwendet wird.

8. Verfahren nach Anspruch 2 oder 3,
**dadurch gekennzeichnet,**
**dass** bei mehreren Kaskaden (9, 18) das Management (1) das Potential einer ersten Kaskade (9, 18) voll und dann nacheinander die jeweiligen Potentiale weiterer Kaskaden (18, 9) ausschöpft.

9. Verfahren nach Anspruch 8,
**dadurch gekennzeichnet,**
**dass** als erstes das Potential der Temperatur-Kaskade (9) voll ausgeschöpft wird.

10. Verfahren nach Anspruch 8,
**dadurch gekennzeichnet,**
**dass** bei sequentieller Verbrennung mit einer ersten Brennkammer (43A) als erstes das Potential der zugehörigen ersten Temperatur-Kaskade (9A) voll ausgeschöpft wird.

**Claims**

1. Method for adjusting a main controlled variable during operation of a gas turbine set, essentially comprising a compressor (40), at least one combustion chamber (43), at least one turbine (41) and one generator (46), with the nominal value (3) being compared with a measured value (4), and the resultant main control difference between the nominal value (3) and measured value (4) being transmitted to a variable control element (14, 23),
**characterized in that**
the resultant main control difference between the nominal value (3) and the measured value (4) is distributed via a management device (1) between at least two cascades (9, 18), with the cascades (9, 18) essentially being formed from a main controlled variable regulator (6, 15) and a downstream variable regulator (8, 17), which acts on the respective variable control element (14, 23).

2. Method according to Claim 1,
**characterized in that**
the power is used as the main controlled variable.

3. Method according to Claim 1,
**characterized in that**
the rotation speed is used as the main controlled variable.

4. Method according to Claim 2 or 3,
**characterized in that**
at least one temperature cascade (9) is used, essentially comprising a main controlled variable regulator (6) and a temperature regulator (8).

5. Method according to Claim 4,
**characterized in that**
a fuel mass flow adjustment device (14) is used as the control element for the temperature regulator (8).

6. Method according to Claim 2 or 3,
**characterized in that**
at least one pressure cascade (18) is used, essentially comprising a main controlled variable regulator (15) and a pressure regulator (17).

7. Method according to Claim 6,
**characterized in that**
a guide vane adjustment device (23) in the compressor (40) is used as the control element for the pressure regulator.

8. Method according to Claim 2 or 3,
**characterized in that**,
if there are a number of cascades (9, 18), the management device (1) fully exhausts the potential of a first cascade (9, 18), and then successively exhausts the respective potentials of further cascades (18, 9).

9. Method according to Claim 8,
   **characterized in that**
   the potential of the temperature cascade (9) is fully exhausted first of all.

10. Method according to Claim 8,
    **characterized in that**,
    in the case of sequential combustion with a first combustion chamber (43A), the potential of the associated first temperature cascade (9A) is fully exhausted first of all.

## Revendications

1. Procédé pour ajuster une grandeur réglée principale lors de la conduite d'un turbogroupe à gaz, se composant essentiellement d'un compresseur (40), d'au moins une chambre de combustion (43), d'au moins une turbine (41) et d'un générateur (46), dans lequel la valeur de consigne (3) est comparée à une valeur mesurée (4) et la différence de régulation principale résultante entre la valeur de consigne (3) et la valeur mesurée (4) est transmise à un organe de réglage d'une grandeur (14, 23), **caractérisé en ce que** la différence de régulation principale résultante entre la valeur de consigne (3) et la valeur mesurée (4) est répartie par un gestionnaire (1) sur au moins deux cascades (9, 18), les cascades (9, 18) étant composées essentiellement d'un régulateur de la grandeur réglée principale (6, 15) et d'un régulateur d'une grandeur (8, 17) monté à la suite, qui agit sur l'organe de réglage d'une grandeur respectif (14, 23).

2. Procédé suivant la revendication 1, **caractérisé en ce que** l'on utilise la puissance comme grandeur réglée principale.

3. Procédé suivant la revendication 1, **caractérisé en ce que** l'on utilise la vitesse de rotation comme grandeur réglée principale.

4. Procédé suivant la revendication 2 ou 3, **caractérisé en ce que** l'on utilise au moins une cascade de température (9), composée essentiellement d'un régulateur de la grandeur réglée principale (6) et d'un régulateur de température (8).

5. Procédé suivant la revendication 4, **caractérisé en ce que** l'on utilise un ajustement du flux massique de combustible (14) comme organe de réglage du régulateur de température (8).

6. Procédé suivant la revendication 2 ou 3, **caractérisé en ce que** l'on utilise au moins une cascade de pression (18), composée essentiellement d'un régulateur de la grandeur réglée principale (15) et d'un régulateur de pression (17).

7. Procédé suivant la revendication 6, **caractérisé en ce que** l'on utilise un ajustement des aubes directrices (23) dans le compresseur (40) comme organe de réglage du régulateur de pression (17).

8. Procédé suivant la revendication 2 ou 3, **caractérisé en ce qu'**en cas de plusieurs cascades (9, 18), le gestionnaire (1) épuise entièrement le potentiel d'une première cascade (9, 18) et ensuite l'un après l'autre les potentiels respectifs des autres cascades (18, 9).

9. Procédé suivant la revendication 8, **caractérisé en ce que** l'on épuise entièrement en premier lieu le potentiel de la cascade de température (9).

10. Procédé suivant la revendication 8, **caractérisé en ce qu'**en cas de combustion séquentielle, on épuise entièrement en premier lieu le potentiel de la première cascade de température associée (9A) avec une première chambre de combustion (43A).

Fig.1

Fig.2